(19) Europäisches Patentamt
European Patent Office
Office européen des brevets

(11) **EP 3 775 840 B1**

(12) **FASCICULE DE BREVET EUROPEEN**

(45) Date de publication et mention de la délivrance du brevet:
**23.10.2024 Bulletin 2024/43**

(21) Numéro de dépôt: **19719349.3**

(22) Date de dépôt: **28.03.2019**

(51) Classification Internationale des Brevets (IPC):
**G01N 15/14** *(2024.01)*

(52) Classification Coopérative des Brevets (CPC):
**G01N 15/1433; G06V 20/695; G06V 20/698;**
G01N 2015/1006; G01N 2015/1402

(86) Numéro de dépôt international:
**PCT/FR2019/050718**

(87) Numéro de publication internationale:
**WO 2019/186073 (03.10.2019 Gazette 2019/40)**

(54) **METHODE DE DETECTION DE CELLULES PRESENTANT AU MOINS UNE ANOMALIE DANS UN ECHANTILLLON CYTOLOGIQUE**

VERFAHREN ZUR DETEKTION VON ZELLEN MIT MINDESTENS EINER ANOMALIE IN EINER ZYTOLOGISCHEN PROBE

METHOD FOR DETECTING CELLS HAVING AT LEAST ONE ANOMALY IN A CYTOLOGICAL SAMPLE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **29.03.2018 FR 1800251**

(43) Date de publication de la demande:
**17.02.2021 Bulletin 2021/07**

(73) Titulaire: **Office National d'Etudes et de Recherches Aérospatiales 91120 Palaiseau (FR)**

(72) Inventeurs:
• **HADDAD, Zehira 91120 Palaiseau (FR)**
• **HERBIN, Stéphane 75015 Paris (FR)**
• **CHAN-HON-TONG, Adrien 91120 Palaiseau (FR)**

(74) Mandataire: **Hautier IP 20, rue de la Liberté 06000 Nice (FR)**

(56) Documents cités:
WO-A1-2005/045734    WO-A2-00/03246
US-A- 5 933 519    US-A1- 2012 262 705

• YU PENG ET AL: "Clustering nuclei using machine learning techniques", COMPLEX MEDICAL ENGINEERING (CME), 2010 IEEE/ICME INTERNATIONAL CONFERENCE ON, 1 July 2010 (2010-07-01), Piscataway, NJ, USA, pages 52 - 57, XP055531089, ISBN: 978-1-4244-6841-6, DOI: 10.1109/ICCME.2010.5558874

EP 3 775 840 B1

**Description**

La présente invention concerne une méthode de détection de cellules présentant au moins une anomalie dans un échantillon cytologique, à partir d'une image numérisée ou de plusieurs images numérisées du même échantillon. L'invention se rapporte également à un dispositif mettant en oeuvre cette méthode.

L'invention se rapporte au domaine de la cytologie qui est l'étude par microscopie des cellules d'un échantillon cytologique après fixation sur une lame. Plus précisément, il s'agit de l'étude des aspects morphologiques, radiométriques ou biochimiques de cellules normales ou atypiques, c'est-à-dire présentant au moins une anomalie. Un exemple est divulgué dans US 5 933 519 A.

Le dépistage du cancer est un des domaines d'application de la cytologie, et consiste à rechercher et à mettre en évidence un cancer à l'aide de prélèvements d'échantillons cytologiques sur un sujet. Le dépistage est réalisé en partie dans un laboratoire d'anatomopathologie par des cytotechniciens et cytopathologistes formés aux méthodes de détection de cellules atypiques. La cytologie est très utilisée pour la détection de certains cancers car elle permet de les diagnostiquer à différents stades, certains cancers ayant par exemple un stade précoce dit « bas grade » et un stade plus avancé dit « haut grade » (le grade peut aussi correspondre à un type de cancer). Il est évident que le diagnostic précoce d'un cancer est un grand enjeu avec d'importantes répercussions liées au taux de survie des sujets atteints et également au coût correspondant pour soigner ces derniers. Par exemple, chaque année dans le cadre du cancer de la vessie, 10 millions de cytologies urinaires sont effectuées dans le monde pour aider à le diagnostiquer, l'analyse de lames de cytologie d'échantillons provenant de mictions spontanées pour diagnostiquer un cancer de la vessie étant une pratique courante.

Cependant, cette méthode de diagnostic par l'analyse d'échantillon cytologiques est limitée d'une part par l'aspect humain, c'est-à-dire l'expérience et le nombre décroissants de cytopathologistes et de cytotechniciens, et d'autre part par une faible sensibilité pour certains cancers. Typiquement, il existe une très faible sensibilité pour le diagnostic du cancer bas grade de la vessie car les cellules atypiques ou anormales n'ont pas encore subi de déformations morphologiques prononcées et sont alors difficilement détectables par l'oeil humain. D'où le besoin de rechercher des procédés utilisables en routine et peu coûteux qui permettraient d'augmenter la performance et également la fiabilité de l'ensemble de cette pratique.

A partir de cette situation, un des buts de l'invention consiste à fournir une méthode de détection de cellules présentant au moins une anomalie cellulaire dans un échantillon cytologique permettant d'aider par la suite à la détection de cancer, notamment du cancer de la vessie, à partir d'image de lames numérisées. L'invention permet avantageusement, à l'aide d'un module de traitement mis en oeuvre par ordinateur, une analyse automatisée et exhaustive des cellules de l'échantillon présent sur la lame. Ainsi, l'analyse de l'échantillon cytologique et de toutes les cellules potentiellement anormales est complète, rapide, plus précise et permet de palier les erreurs d'analyse courantes des cytopathologistes et des cytotechniciens. De plus, cette méthode assure une standardisation du résultat de l'analyse cytologique de l'échantillon. Mais encore, cette méthode permet en outre d'aider au diagnostic précoce de cancer dit bas grade, notamment du cancer bas grade de la vessie, en détectant des cellules présentant de faibles anomalies.

L'invention vise à remédier aux inconvénients de l'état de la technique cités ci-dessus et est motivée par l'absence de solutions alternatives. Pour atteindre ce but ou d'autres, un premier aspect de l'invention propose une méthode de détection de cellules présentant au moins une anomalie dans un échantillon cytologique à partir d'au moins une première image de microscopie électronique numérisée de l'échantillon, selon la revendication 1. La méthode est exécutée à l'aide d'un module de traitement mis en oeuvre par ordinateur, notamment entièrement exécutée par le module de traitement mis en oeuvre par ordinateur.

La méthode comprend une étape de traitement de la première image, comprenant les sous-étapes suivantes :

- à partir de la première image, détecter chaque élément présent dans l'échantillon, choisi parmi au moins une cellule isolée ou un groupement de cellules, à l'aide d'une détection colorimétrique,

- filtrer chaque cellule isolée et/ou chaque groupement de cellules à l'aide de la détection colorimétrique,

- à partir de chaque groupement de cellules détecté, individualiser au moins une cellule avec son noyau, à l'aide d'au moins une méthode de segmentation fondée sur une détection des contours dans le groupement de cellules,

De plus, la méthode comprend en outre une étape de décèlement d'anomalie cellulaire, comprenant les sous-étapes suivantes :

- pour chaque cellule isolée ou individualisée dans l'étape précédente, calculer des données d'au moins deux caractéristiques d'anomalies distinctes dites « caractéristiques expertes d'anomalie», et déterminer si ladite cellule présente au moins une anomalie, en comparant ces données calculées avec des données de références,

- puis compter le nombre total de cellules dans l'échantillon présentant au moins une anomalie,

Et enfin, elle comprend en outre une première étape de caractérisation de l'échantillon suivant un niveau d'anomalie de l'échantillon, comprenant les sous-étapes suivantes :

- comparer le nombre total de cellules présentant au moins une anomalie à une valeur seuil du niveau d'anomalie, de préférence une valeur seuil égale à au moins trois cellules présentant chacune au moins une anomalie,

- si le nombre total de cellules présentant au moins une anomalie est inférieur à la valeur seuil du niveau d'anomalie, classer l'échantillon dans une classe représentative d'un échantillon avec un niveau d'anomalie nul,

- si le nombre total de cellules présentant au moins une anomalie est supérieur à la valeur seuil du niveau d'anomalie, classer l'échantillon dans une classe représentative d'un échantillon avec un niveau d'anomalie avéré, c'est-à-dire un niveau d'anomalie faible ou fort.

Selon cet aspect de l'invention, la méthode de détection classe, in fine, l'échantillon cytologique selon un niveau d'anomalie cellulaire à partir de l'analyse d'au moins une première image, de préférence avec une seconde image. Le module de traitement utilisé dans l'invention est apte à combiner des données calculées à partir de la première image de microscopie électronique à transmission numérisée et/ou d'une seconde image de microscopie à fluorescence numérisée de l'échantillon avec des données de références connues en cytologie.

On comprendra que lors de l'étape de traitement de la première image citée précédemment, plusieurs éléments constitutifs de la première image sont détectés, notamment des cellules isolées, des groupements de cellules, des éléments à rejeter ou des amas de cellules non analysables et qui sont donc écartés pour la bonne poursuite de la méthode.

Cette solution permet de bénéficier du classement de l'échantillon selon deux classes et de diagnostiquer si l'échantillon a un niveau d'anomalie cellulaire nul ou avéré. Par la suite, ce résultat permettra d'aider significativement le diagnostic d'un cancer ou non par un spécialiste.

Par ailleurs, on notera que selon l'invention une caractéristique experte d'anomalie d'une cellule peut être considérée comme un bon indicateur de la conformité d'une cellule.

De préférence, une des caractéristiques expertes d'anomalie est un rapport surfacique du noyau dans la cellule ou une irrégularité du noyau ou une colorimétrie mottée ou une hyper colorimétrie du noyau. On entend par colorimétrie mottée, la mesure de l'intensité de coloration de certains points ou de tâches.

De préférence encore, la caractéristique experte d'anomalie est une caractéristique du noyau, en particulier, un rapport de taille du noyau au regard de la taille de la cellule, un positionnement du noyau dans la cellule, ou une caractéristique de colorimétrie du noyau. Plus précisément la caractéristique experte d'anomalie est un rapport surfacique du noyau dans la cellule ou une irrégularité du noyau ou une colorimétrie mottée ou une hyper colorimétrie du noyau.

Avantageusement, au moins une des caractéristiques expertes d'anomalie est une irrégularité du noyau, le calcul de ladite irrégularité du noyau est un calcul d'écart correspondant à la comparaison entre chaque noyau de cellule analysée et un noyau type dit de référence d'une cellule dite de « référence » en cytologie. Ce calcul d'écart est choisi parmi la liste suivante: une différence de surface, une différence de périmètre, une différence de la convexité du noyau, une différence de barycentre, une différence entre une longueur du contour de chaque noyau détecté, une différence d'irrégularité d'un contour du noyau, une différence du nombre de pixels dans chaque noyau et une différence d'excentricité du noyau dans la cellule.

Selon un mode de réalisation particulier, au moins une caractéristique experte d'anomalie est une longueur du contour du noyau, le calcul de cette caractéristique comprend en outre les sous-étapes suivantes :

- calculer un contour réel du noyau en utilisant une méthode d'extraction de contour du noyau,

- déterminer un diamètre du noyau, de préférence le plus grand diamètre, en traçant une enveloppe englobante du noyau,

- tracer une courbe convexe fermée de rang C2 dont l'enveloppe englobante est celle d'un noyau de référence,

- calculer une différence entre le contour réel du noyau et la courbe convexe tracée, représentant le contour d'un noyau de référence.

Selon un mode de réalisation particulier, au moins une caractéristique experte d'anomalie est une irrégularité d'un contour du noyau, le calcul de cette caractéristique comprend en outre les sous-étapes suivantes :

- détecter au moins un point anguleux dans le contour du noyau détecté,

- calculer un nombre total de points anguleux dans le contour du noyau,

- mesurer un angle pour chaque point anguleux correspondant, puis

- déterminer un degré d'irrégularité du contour du noyau en combinant les données du nombre de points anguleux détecté par noyau et leurs angles.

Selon l'invention, la méthode comprend en outre une étape de sélection typologique, comprenant les sous-étapes suivantes:

- à partir de la première image numérisée de l'échantillon, mesurer la taille des cellules, puis classer les cellules selon leur taille,

- associer chaque classe de cellules à un type cellulaire correspondant, puis sélectionner au moins un type cellulaire choisi correspondant à une taille de cellule, tel que le type cellulaire urothélial.

Selon ce mode de réalisation particulier, l'invention peut comprendre en outre une seconde étape de caractérisation de l'échantillon suivant le niveau d'anomalie des cellules de l'échantillon. Cette seconde étape comprend en outre les sous-étapes suivantes:

- à partir d'une seconde image de fluorescence numérisée de l'échantillon, sélectionner toutes les cellules d'un type cellulaire choisi, tel qu'urothélial, selon leur localisation dans l'échantillon prédéfinie au préalable dans la première image numérisée,

- détecter la présence d'un halo de fluorescence autour de chaque cellule sélectionnée précédemment, de préférence mesurer un taux de fluorescence, de préférence encore mesurer un taux d'étalement de la fluorescence,

- si un halo de fluorescence est détecté, de préférence si un taux minimum de fluorescence est mesuré, de préférence encore un taux minimum d'étalement de la fluorescence est mesuré, classer l'échantillon dans une classe représentative d'un échantillon avec un niveau d'anomalie faible.

Selon un autre mode de réalisation particulier, l'invention comprend une étape de recommandation d'exploitabilité de l'échantillon selon un nombre de cellules comprenant un noyau et selon une valeur seuil minimum d'exploitabilité, de préférence la valeur seuil minimum d'exploitabilité est égale à au moins sept cellules comprenant un noyau dans la première image.

Selon l'invention, la méthode, à l'aide du module de traitement, combine l'ensemble des données obtenues et classe l'échantillon cytologique analysé à partir de la première image et de la seconde image, dans l'une des trois classes associée au niveau d'anomalie cellulaire, nul, faible ou fort.

Un deuxième aspect de l'invention propose une méthode de détection des cellules présentant au moins anomalie dans un échantillon cytologique à partir d'une première image et/ou d'une deuxième image à l'aide d'une méthode d'apprentissage profond, à l'aide d'un module de traitement mis en oeuvre par ordinateur, pour affecter l'échantillon à l'une des trois classes associée à un niveau d'anomalie cellulaire de l'échantillon, nul, faible ou fort.

Cette méthode est avantageuse en ce qu'elle utilise les données fournies par au moins une des variantes du premier aspect de l'invention.

De préférence, l'échantillon cytologique est un échantillon urinaire de miction spontanée.

Un troisième aspect de l'invention propose un dispositif mettant en oeuvre une méthode telle que décrite ci-dessus.

Un quatrième aspect de l'invention propose une utilisation de la méthode telle que décrite ci-dessous pour aider au diagnostic du cancer de la vessie.

D'autres particularités et avantages de la présente invention apparaîtront dans la description ci-après d'exemples de réalisation non limitatifs, en référence aux dessins annexés dans lesquels :

- la figure 1 est un schéma illustrant les différentes étapes de la méthode mise en oeuvre selon un mode préféré de l'invention,

- la figure 2 représente un premier exemple d'une première image de microscopie électronique numérisée d'un échantillon avant et après une étape de traitement. La première image comprend ici notamment des cellules isolées, des amas cellulaires, des groupements de cellules et des éléments à rejeter,

- la figure 3 représente un deuxième exemple d'une première image de microscopie électronique numérisée d'un deuxième échantillon avant et après une étape de traitement de la première image. La première image comprend ici notamment des cellules isolées, des amas cellulaires, des groupements de cellules et des éléments à rejeter.

- la figure 4 représente deux images de microscopie électronique d'une cellule isolée et deux images de microscopie électronique de leurs noyaux extraits à l'aide d'un module de traitement mis en oeuvre par ordinateur,

- la figure 5 représente des images de microscopie électronique d'une cellule isolée, de son noyau extrait et d'un exemple de tracé pour mesurer le rapport taille noyau cellule, à l'aide du module de traitement mis en oeuvre par ordinateur,

- la figure 6 est un schéma illustrant les différentes étapes de la méthode mis en oeuvre selon un autre mode de réalisation selon lequel elle comprend une deuxième étape de caractérisation de l'échantillon à partir d'une seconde image numérisée,

- la figure 7 est un schéma illustrant un deuxième aspect de l'invention, plus précisément une méthodologie d'implémentation pour un apprentissage profond appliqué à la classification d'au moins une image d'échantillon cytologique correspondant à un ensemble d'imagettes.

Il faut tout d'abord noter que les figures exposent l'invention de manière schématique. Ces figures représentent des exemples de réalisation donnés à titre non limitatifs et ne respectent pas nécessairement une chronologie particulière.

La présente invention s'inscrit dans le cadre général de l'application de la vision par ordinateur d'images numérisées d'objets complexes et nombreux. L'invention traite d'une méthode originale pour détecter les cellules présentant au moins une anomalie dans un échantillon cytologique à partir d'une première image numérisée, et de préférence à l'aide d'une seconde image numérisée du même échantillon. La première image est obtenue à l'aide d'un microscope électronique en transmission et la seconde image est obtenue à l'aide d'une microscopie en fluorescence. Les images utilisées sont issues de la numérisation particulière d'un échantillon cytologique ayant subi une préparation adaptée pour la méthode, qui a ensuite été étalée sur une lame de cytologie. La méthode selon l'invention peut utiliser un échantillon cytologique provenant indifféremment de fluide ou de prélèvement d'éléments du corps humain selon l'analyse souhaitée. Pour le mode de réalisation présenté ici, on prend un échantillon d'urine de miction spontanée. Dans ce contexte, le résultat de cette méthode de détection de cellules présentant au moins une anomalie dans un échantillon cytologique permettra d'aider au diagnostic d'un cancer de la vessie, notamment à un stade précoce ou dit bas grade du cancer de la vessie.

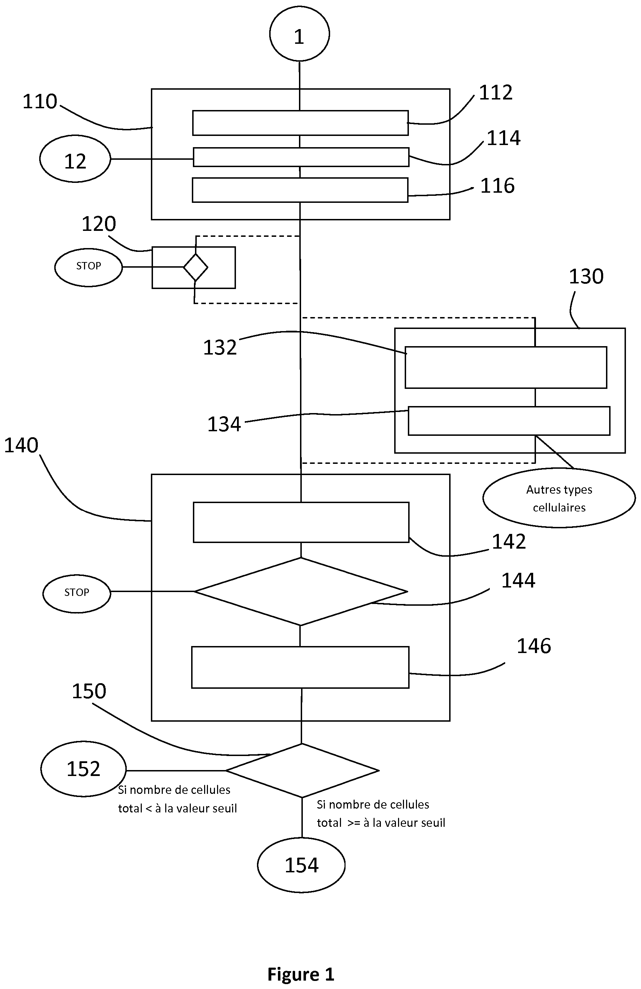

Dans la suite de la description et tel qu'illustré sur la figure 1, on va décrire un mode de réalisation préféré comprenant plusieurs étapes pouvant être préliminaire, intermédiaire ou successive. On comprendra que selon le mode de réalisation choisi on pourra ajouter ou enlever une ou plusieurs de ces étapes à la méthode selon l'invention.

Avantageusement, la méthode de détection selon l'invention comprend des étapes exécutées à l'aide d'un module de traitement mis en oeuvre par un ordinateur apte à combiner des données calculées à partir de l'échantillon avec des données de références connues en cytologie. Les données dites calculées, sont calculées et recueillies à partir d'au moins une image numérisée d'une lame d'au moins un échantillon par le module de traitement. A l'aide d'une méthode d'apprentissage le module de traitement peut ainsi combiner toutes les données calculées et recueillies à partir de l'échantillon ou de plusieurs échantillons, et avec des données de références connues en cytologie.

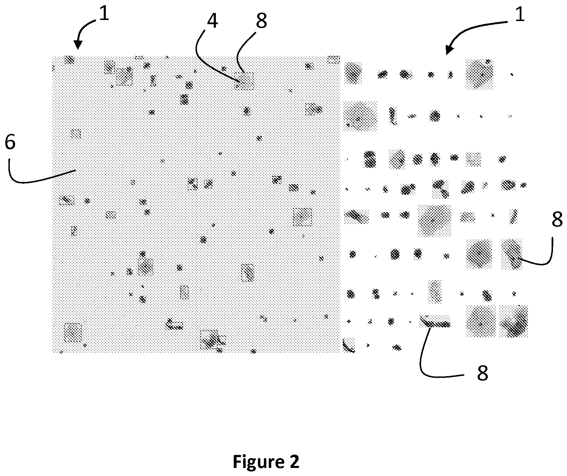

Selon le mode de réalisation préféré présenté ici, la méthode de détection selon l'invention comprend une étape préliminaire de traitement d'image 110. Cette étape préliminaire de traitement d'image 110, illustrée dans les figures 1 à 3, a pour but d'affiner au maximum la sélection de départ des cellules pour la détection de cellules, notamment en écartant des éléments 4 constitutifs d'une première image numérisée 1 qui pourraient interférer et diminuer la finesse du résultat de la méthode de détection. Pour ce faire, cette étape préliminaire de traitement 110 comprend une sous-étape de détection 112 des éléments 4 présents dans la première image 1. Cette sous-étape de détection 112 est au moins en partie basée sur une détection colorimétrique pouvant consister au moins en partie à une segmentation en plusieurs groupes de l'ensemble des couleurs de la première image 1, le groupe le plus clair et le plus répandu correspondant à la couleur du fond de l'image 6 et le groupe le plus foncé correspondant à la couleur des noyaux cellulaires. On considéra que tout pixel n'étant pas un pixel du fond de l'image 6 est un pixel d'un élément 4, c'est-à-dire d'un objet biologique. Ainsi, le fond de l'image 6 est déterminé et tout ce qui ne fait pas partie du fond de l'image 6 correspond à un élément 4, c'est-à-dire, une cellule, un groupement de cellules, un amas de cellules ou un élément à rejeter. Puis, tous les éléments 4 sont extraits du fond de l'image 6 en créant plusieurs imagettes 8 à l'aide d'une méthode de segmentation. Pour catégoriser les différents éléments 4 détectés, on utilise en outre cette détection colorimétrique, détectant les noyaux, ici cette sous-étape est dite « grossière ».

De plus, on pourra combiner cette première sous-étape de détection des noyaux, c'est-à-dire de détection colorimétrique à des mesures des dimensions de chacun des éléments 4 détectés. Par exemple, si plusieurs noyaux sont détectés par détection colorimétrique la mesure de cet élément aidera à identifier le type d'élément 4 détecté.

A l'issue de la sous-étape de détection 112, il est ainsi possible d'identifier différentes pré-classes des éléments 4 constitutifs de la première image 1 à l'aide de la détection colorimétrique des noyaux, et éventuellement de la mesure de ces éléments 4, tels que :

- Eléments à rejeter : C'est tout ce qui ne constitue pas une cellule à noyau. En effet, tout élément sans noyau est à rejeter, car non interprétable, cela peut être soit un déchet, soit une fausse détection.

- Cellules isolées : Ce sont les imagettes qui ne contiennent qu'un seul noyau et qui sont par conséquent des cellules isolées.

- Groupement de cellules : Ce sont des cellules regroupés (qui se touchent ou qui se chevauchent) et qui contiennent de ce fait plusieurs noyaux.

- Amas : Ce sont des regroupements particuliers de cellules très denses (très foncés) et où les cellules se chevauchent d'une façon bien particulière. Ce qui différencie les amas des groupements classiques de cellules est le fait d'avoir dans les amas une superficie de la classe "noyau" plus importante.

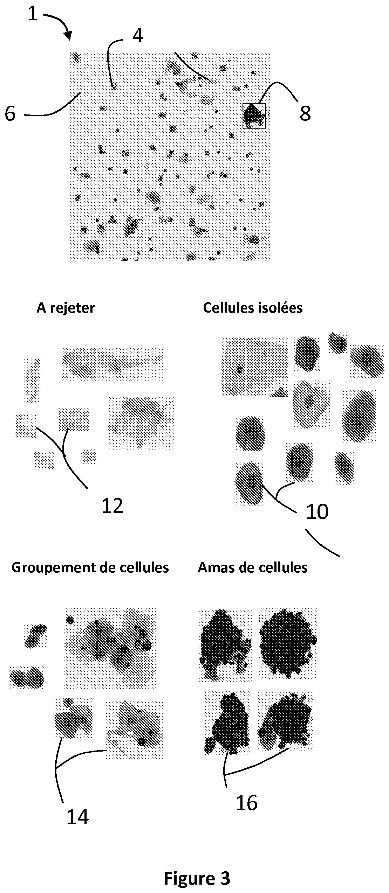

De façon plus détaillée, la figure 3 illustre un exemple de première image 1 subissant l'étape préliminaire de traitement 110. Tel que décrit plus tôt, lors de cette étape 110, la première image 1 subit une segmentation pour obtenir les imagettes 8 entourant les éléments 4 présentant une couleur foncé, ces imagettes 8 sont ensuite pré classées en quatre classes : éléments à rejeter 12, cellules isolées 10, groupement de cellules 14 et amas de cellules 16 (qui seront rejetées également). Pour le bon déroulement de l'invention, la méthode de détection, selon l'invention doit se faire à partir de cellules nécessairement isolées ou individualisées à partir d'un groupement de cellules et comprenant un noyau. Les cellules isolées 10 et les groupements de cellules 14 sont filtrés lors d'une sous-étape de filtrage 114 utilisant la détection colorimétrique.

En conséquence, la pré classe groupement de cellules 14 subit une sous-étape d'individualisation 116 après la sous-étape de filtrage 114. Cette sous-étape 116 consiste à individualiser les cellules du groupement de cellules 14. Par individualiser, on entend extraire du groupement de cellules 14 au moins une cellule comprenant un noyau. On notera que cette sous-étape d'individualisation 116 n'est pas exécutée pour la pré-classe des « amas de cellules» 16. En effet, les amas de cellules 16 sont des structures trop complexes à individualiser et leur prise en compte engendrerait beaucoup plus d'erreurs que d'informations pertinentes à utiliser. C'est pour cela que les amas 16 ne sont pas utilisés selon l'invention. La sous-étape d'individualisation 116 des cellules se fait à l'aide d'une nouvelle segmentation qui est fondée, sur la détection de contours via le calcul du gradient de la première image ou via l'utilisation d'une transformée mathématique qui a un aspect multidirectionnel telles que Radon, Gabor ou les transformées multi échelles multidirectionnelles. Après avoir déterminé les contours et éventuellement à l'aide d'une approche de morphologie mathématique, on extrait toute structure comprise dans un contour fermé, correspondant donc à une cellule, et on la définit comme étant une cellule individualisée, intéressante pour la suite de la méthode selon l'invention.

Selon le mode de réalisation préféré ici, une étape optionnelle de recommandation d'exploitabilité 120 de l'échantillon pour détecter des cellules potentiellement cancéreuses peut être exécutée. Selon les modes de réalisation, cette étape de recommandation d'exploitabilité 120 peut intervenir une ou plusieurs fois à plusieurs niveaux durant le déroulement de la méthode selon l'invention, de préférence à la fin de l'étape préliminaire de traitement 110. Cette étape de recommandation d'exploitabilité 120 revient à estimer si la première image 1 contient un nombre de cellules comprenant un noyau, suffisant pour que la détection dans l'échantillon ne soit pas biaisée. Pour ce faire, le nombre total de cellules avec noyau présentes dans la première image 1 est déterminé. Ce nombre total de cellules sera communiqué à un utilisateur qui validera ou non la poursuite de la méthode

selon l'invention. De préférence, ce nombre total de cellules avec noyau est comparé à une valeur d'un seuil minimum d'exploitabilité qui sera déterminé au préalable par l'utilisateur. En variante, l'utilisateur pourra rentrer la valeur du seuil minimum d'exploitabilité de l'échantillon souhaitée dans le module de traitement pour permettre la poursuite automatique ou non de la méthode inventive. Par conséquent, la méthode de détection peut se poursuivre même s'il n'y a que très peu de cellules avec noyau dans la première image 1, dans la mesure où le nombre total de ces cellules est supérieur ou égal à la valeur du seuil minimum d'exploitabilité. Par exemple, la valeur du seuil minimum d'exploitabilité est égale à au moins sept cellules avec noyau détectées dans l'échantillon, ainsi la méthode se poursuit si le nombre total de cellules avec noyau est supérieur ou égal à sept. Inversement, si le nombre de cellules avec noyau est insuffisant l'étape de recommandation d'exploitabilité 120 peut interrompre la méthode de détection.

Selon le mode de réalisation préféré ici, une étape optionnelle préliminaire de sélection typologique 130 pour détecter des cellules d'un type cellulaire choisi dans l'échantillon avec au moins une anomalie cellulaire, plus précisément, potentiellement cancéreuses, peut être exécutée. Pour ce faire, à partir de la première image 1, les cellules de l'échantillon sont mesurées puis classées selon leurs tailles, étape 132. A l'aide du module de traitement, les cellules classées selon leurs tailles sont affiliées à des types cellulaires, puis sélectionnées selon le type cellulaire choisi, tel qu'urothélial ou tout autre type cellulaire dont un niveau d'anomalie cellulaire peut-être corrélé à un type de cancer, étape 134. Selon une variante, l'utilisateur pourra définir lui-même le type cellulaire préféré. Par exemple, pour une méthode de détection appliquée à des échantillons de cytologie urinaire pour aider au diagnostic du cancer de la vessie, le type cellulaire préféré sera le type urothélial. De façon générale, l'étude des cellules urothéliales est un bon indicateur pour aider au diagnostic du cancer de la vessie, notamment pour déterminer le stade du cancer en fonction des anomalies rencontrées.

Suite à l'étape préliminaire de traitement d'image 110, à l'étape optionnelle de recommandation d'exploitabilité de l'échantillon 120, et à l'étape optionnelle préliminaire de classification typologique 130 on obtient une sélection fine de cellules isolées ou individualisées, comprenant un noyau et d'un type cellulaire choisi.

Pour rappel, la méthode selon l'invention aboutit à la détection de cellules présentant au moins une anomalie dans l'échantillon cytologique à partir d'au moins une première image. Le niveau d'anomalie cellulaire de l'échantillon est corrélé au nombre et au type d'anomalie cellulaire rencontré dans l'échantillon cytologique. En d'autres termes, la méthode selon l'invention peut permettre de classer l'échantillon soit dans une classe de niveau d'anomalie cellulaire dit avéré, soit dans une classe de niveau d'anomalie cellulaire dit nul.

Pour ce faire, le mode de réalisation préféré illustré sur la figure 1 comprend en outre une étape de décèlement d'anomalie cellulaire 140 dans l'échantillon. Selon l'invention, une cellule présentant une anomalie est définie comme une cellule présentant une caractéristique experte d'anomalie divergente d'une donnée dite de référence, c'est-à-dire divergente de la norme. En d'autres termes, il s'agit d'une cellule qui présente au moins une anomalie c'est-à-dire une caractéristique dite experte d'anomalie qui est anormale. Ainsi le calcul d'une caractéristique experte d'anomalie permet d'obtenir une donnée qui permet d'aider à déterminer un écart avec la norme et donc la présence ou non d'une anomalie. On entend par le calcul de caractéristiques expertes d'anomalie, la mesure ou tout autre type de méthodes mathématiques. Selon l'invention, la caractéristique experte d'anomalie qui est calculée est une caractéristique du noyau, en particulier elle correspond à un rapport de taille entre le noyau et le cytoplasme de la cellule ou à une mesure du positionnement du noyau ou à une mesure colorimétrique du noyau. Plus précisément, la caractéristique experte d'anomalie correspond à un rapport surfacique du noyau dans la cellule, ou à une irrégularité du noyau, ou à une colorimétrie mottée ou une hyper colorimétrie du noyau. Les différentes caractéristiques expertes d'anomalie mentionnées ci-dessus, à titre non limitatif, peuvent révéler des anomalies selon les valeurs calculées dans l'échantillon. On comprendra que d'autres types de caractéristiques expertes d'anomalies pourront être indifféremment calculées et utilisées comme paramètres pour classer les cellules.

Les anomalies recherchées et détectées dans chaque cellule vont, plus particulièrement, concerner son noyau. Pour ce faire, il faut donc une détection fine du noyau pour pouvoir détecter les anomalies qui lui sont liées.

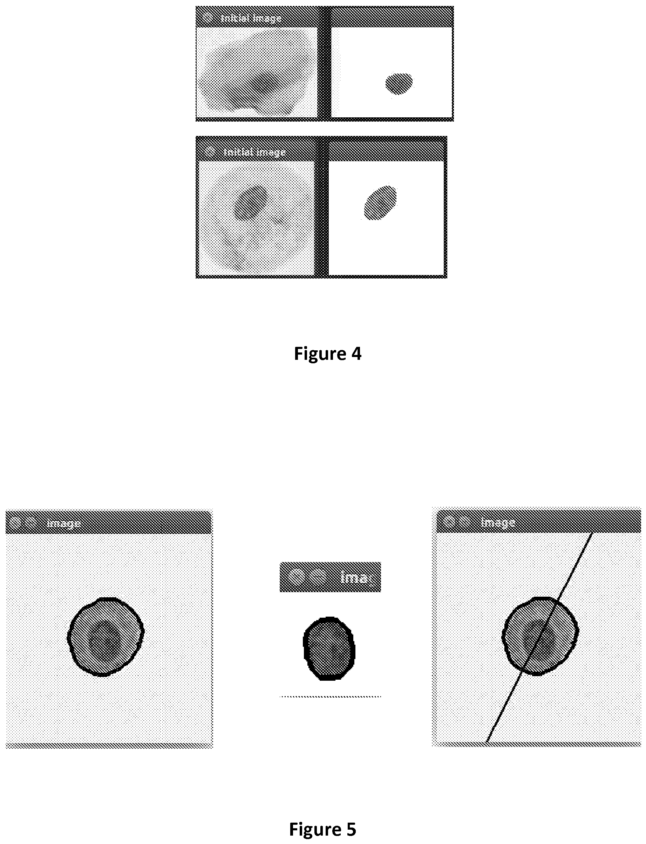

La détection fine du noyau se fait par une segmentation. Cette segmentation peut notamment se faire par affinement à partir de la segmentation grossière utilisant uniquement la colorimétrie. Cette technique décrite plus tôt dans la description consiste à partir d'une enveloppe englobante, de préférence formant un rectangle autour du noyau. Cette enveloppe englobante délimitera une zone autour du noyau, toujours incluse dans la cellule, et débordant du noyau de 10 à 40% (de la surface totale du noyau), de préférence entre 20 à 30 %. Les figures 4 et 5 illustrent chacune le résultat d'une détection fine de noyau.

Selon le mode de réalisation, le noyau peut déjà avoir été détecté à l'étape préliminaire de traitement de l'image 110 lors de la détection grossière des noyaux à l'aide d'une première segmentation. Un exemple de réalisation consiste à prendre en compte l'enveloppe englobante utilisée pour la détection grossière du noyau et d'estimer dans cette enveloppe la distribution de couleur du noyau ainsi que celle de l'arrière-plan en utilisant un modèle de mélange de gaussiennes. Par la suite, on l'utilise pour construire un champ aléatoire de Markov sur les étiquettes des pixels, avec une fonction d'énergie qui préfère les régions connectées ayant la même étiquette, et exécutant une optimisation basée sur le Graph cut pour interférer leurs valeurs. Comme cette estimation est susceptible d'être plus précise que l'original extraite de la boîte englobante, ces deux étapes sont répétées jusqu'à la convergence.

L'étape de décèlement d'anomalie cellulaire 140 dans les cellules de l'échantillon se fait en partie par le calcul d'au moins deux caractéristiques expertes d'anomalie distinctes, étape 142.

Dans la suite de la description, on décrit le calcul de quatre types de caractéristiques expertes d'anomalies mettant chacune en évidence la présence ou non d'une anomalie cellulaire morphologique.

Premièrement, on va décrire le calcul de la caractéristique experte d'anomalie du rapport noyau/cytoplasme dans la cellule.

On se propose de calculer à l'aide du module de traitement automatisé le rapport RNC (Rapport Noyau Cellule) qu'on définit par les formules suivantes:

RNC = longuer du plus grand diamètre du noyau / longuer du plus grand diamètre de la cellule correspondant

La figure 5 illustre un exemple de réalisation du calcul du rapport RNC.
Les étapes du calcul sont les suivantes à l'aide du module de traitement :

1. Tracer le plus grand axe correspondant à la cellule,

2. Calculer la longueur de l'axe délimitée par la cellule,

3. Calculer la longueur de ce même axe délimité par le noyau,

On propose également une autre façon de calculer ce rapport en se basant sur le calcul de surfaces.

$$RNC = (\text{Surface du noyau/surface de la cellule})^{1/2}$$

Avec :

Surface de la cellule = Nombre de pixels de la cellule.

Surface du noyau = Nombre de pixels du noyau.

Ce rapport est un chiffre inférieur à 1 puisque le noyau est à l'intérieur de la cellule. Si le RNC est très proche de 1, la cellule est considérée comme étant « un noyau nu » et sera donc rejetée lors de la méthode par le module de traitement. On se propose alors de donner la main à l'utilisateur pour qu'il saisisse un seuil à partir duquel la cellule est considérée comme « un noyau nu ». De même pour les seuils indiquant un RNC normal, critique ou anormal. Par défaut, on initialisera ces seuils avec les valeurs suivantes :

a) RNC<0,5 correspondant à un RNC normal

b) 0,5<RNC<0,7 correspondant à un RNC critique

c) RNC > 0,7 correspondant à un RNC anormal

d) RNC > 0,9 correspondant à un noyau nu non pris en compte « à rejeter »

Plus précisément, le rapport noyau/cellule est calculé à partir du rapport entre le plus grand diamètre de la cellule et le plus grand diamètre du noyau. Dans le cas où la cellule n'est pas très sphérique, on ne prend pas le diamètre réel mais la distance ou longueur de bout en bout de la cellule, correspondant au plus grand diamètre de la cellule. Tous rapports compris
entre 0,9 et 1 ne seront pas interprétables puisque cela correspondra à des noyaux nus. Les rapports supérieurs à 0 ,7 correspondent à une forte anomalie et les rapports compris entre 0,5 et 0,7 correspondent à une faible anomalie.
Deuxièmement, on va décrire le calcul d'une autre caractéristique experte d'anomalie qui est l'irrégularité du noyau.
On entend par noyau irrégulier, tout noyau dont le contour dévie d'une forme classique de contour de noyau dit de référence bien lisse et régulière. On peut le voir aussi comme un contour ayant des points anguleux ou coins.
Pour ce faire, on se propose de calculer l'irrégularité du noyau via trois méthodes dont la troisième méthode décrite est la fusion des deux autres méthodes.
Dans un premier temps, on va décrire la première méthode basée sur le calcul de différence avec un noyau de référence d'une cellule de référence.
La différence calculée peut être une différence surfacique ou une différence de périmètres ou n'importe quelle autre différence telle que la différence de barycentre, la différence de pixel dans chaque région du noyau, la différence entre la longueur des contours de chaque noyau (de référence et réel), la différence linéaire entre le centre de gravité de chaque noyau, la différence entre le nombre de pixels des régions convexes liées à chaque noyau, la différence entre l'excentricité du noyau réel et celle du noyau de référence. Pour rappel, l'excentricité e=0 pour un cercle, 0<e<1 pour une ellipse, e=1 pour une parabole, la différence en termes de régions convexes.

Cette méthode se base, entre autre, sur le calcul de différence entre le contour réel du noyau et le contour de référence du noyau correspondant à une courbe convexe fermée de rang C2 inclus dans une enveloppe englobante du noyau. Pour déterminer le contour de référence du noyau, on définit l'enveloppe englobante du noyau comme un rectangle englobant dont la longueur tracée correspond au plus grand diamètre du noyau. A l'aide du rectangle englobant, le module de traitement va déterminer la courbe C2 à l'intérieur de ce dernier, formant le contour du noyau.

A titre d'exemple, l'ovale est une courbe convexe fermée de rang C2. De même le cercle ou l'ellipse sont des cas particuliers des courbes convexes fermées C2 de type ovale.

Puis, le contour du noyau est extrait par n'importe quelle méthode d'extraction de contours telles que : les détecteurs de gradient par filtrage linéaire ou par masque (comme Sobel, Prewitt ou Roberts), les approches analytiques d'extraction de contours (comme canny ou filtre de Deriche), les contours actifs en prenant comme contour initial l'enveloppe englobante vue précédemment, les levels sets, les contours extraits par des transformées multiéchelles et multidirectionnelles...etc

Récapitulatif des étapes à suivre pour calculer la caractéristique experte d'anomalie d'irrégularité du noyau à l'aide du calcul du contour du noyau:

1. Calculer un contour réel du noyau en utilisant une méthode d'extraction de contours,

2. Déterminer le plus grand diamètre du noyau,

3. Tracer une enveloppe englobante du noyau, c'est-à-dire un rectangle englobant le noyau dont la longueur est égale au plus grand diamètre du noyau,

4. A partir de l'enveloppe englobante, tracer une courbe convexe fermée de rang C2, formant le contour estimé,

5. Calculer une valeur de différence entre le contour réel du noyau et le contour de référence du noyau de référence correspondant à la courbe tracée à l'étape 4, en calculant et en combinant des données de l'échantillon et des données de référence de différentes caractéristiques expertes d'anomalie de formes,

6. Utiliser la valeur de différence entre le contour de référence et le contour réel du noyau pour déterminer la présence d'une anomalie en fonction de valeurs seuils prédéterminées ou entrées par un utilisateur, ou combiner cette donnée à d'autres données de caractéristiques expertes d'anomalie et déterminer la présence d'une anomalie en fonction de valeurs seuils prédéterminées ou entrées par un utilisateur.

On comprendra que l'on peut utiliser ces caractéristiques à l'entrée d'un classifieur type séparateurs à vaste marge (technique d'apprentissage supervisée qui est basée sur la maximisation de la marge. La marge est la distance entre la frontière de séparation et les échantillons les plus proches qui sont appelés vecteurs supports. La technique consiste à trouver la frontière de séparation de marge maximale à partir des exemples d'apprentissage.) et/ou par des réseaux de neurones qui détermineront l'irrégularité du noyau par apprentissage.

Dans un second temps, on va décrire la seconde méthode du calcul de l'irrégularité d'un noyau, basée sur la détection des points anguleux dans un contour de noyau.

L'idée ici est de détecter les points anguleux en détectant les points caractéristiques de type « coins », de calculer l'angle formé correspondant et d'estimer le degré d'irrégularité du noyau en prenant en compte le nombre de coins détectés et leurs angles correspondants.

Un coin est ici défini comme un angle d'un contour de membrane nucléaire. Un coin correspond à l'intersection de deux lignes ou de deux contours de la membrane nucléaire, d'orientation assez différente au voisinage proche du coin.

Les coins sont généralement détectés par le détecteur d'Harris, sauf que ce dernier ne vérifie pas la caractéristique d'invariance à l'échelle et ne peut détecter les coins que dans une seule échelle, ce qui peut mener à détecter de faux coins ou à louper certains coins importants, en particulier lorsqu'on a des images à faible contraste.

Un autre inconvénient majeur du détecteur d'Harris est qu'il produit généralement une sur-détection des coins. Pour remédier à cela, on propose d'utiliser à la suite du détecteur d'Haris, l'algorithme FAST (Features from Accelerated Segment Test) initialement développé par Edward Rosten and Tom Drummond. En effet, ce dernier algorithme peut s'avérer utile pour supprimer les coins redondants. Par conséquent, on l'appliquera pour éliminer les faux coins détectés par le détecteur Haris.

Par ailleurs, l'idée originale et inventive proposée dans le cadre de cette invention est de combiner la transformée en contourlette (transformée multiéchelle multidirectionnelle), le détecteur d'Harris et l'algorithme FAST (Features from Accelerated Segment Test) pour détecter les coins correspondant au contour du noyau puis extraire les orientations et estimer l'irrégularité du noyau. Un des objectifs est de bien estimer l'irrégularité du contour du noyau qui définit la membrane nucléaire. L'idée originale est d'utiliser une transformée qui excelle dans la mise en évidence des contours et les rehausse bien pour pouvoir bien estimer leur irrégularité. Ainsi, l'estimation ne se fera pas classiquement dans le domaine image initial mais dans un domaine composé de différentes échelles où les contours seront bien mis en évidence et bien rehaussés pour bien détecter leur irrégularité. La transformée est donc une transformée multiéchelle et multidirectionnelle de type contourlette qui représente parfaitement les courbes et les contours. C'est un outil d'analyse géométrique multi-échelle qui permet une décomposition selon différents angles d'orientation pour chaque échelle. Contrairement à la transformée en ondelettes classique, les contourlettes capturent parfaitement les caractéristiques anisotropes des images, (information de contour, de bord, de texture). Ainsi, leur utilisation pour mettre en évidence l'irrégularité du contour du noyau est sans doute bien appropriée.

La suite de la description détaille les étapes du calcul de l'irrégularité du noyau proposée dans le cadre de cette seconde méthode :

1. Décomposer la première image en utilisant la transformée en contourlette. On aura plusieurs images correspondantes aux différentes échelles et aux différentes orientations,

2. Calculer la matrice de corrélation $M_\theta$ (matrice relative au détecteur d'Harris) pour chaque pixel de chaque échelle,

3. Déduire la force de coins (corner response function) de chaque pixel correspondant à chaque échelle qui est estimé par:

$$R_\theta = det\ M_\theta - \alpha\ (trace\ M_\theta)^2\ avec\ 0{,}04 < \alpha < 0{,}25$$

Plus précisément, On détecte la force des coins via la "corner response function" qui est une fonction qui retourne des fortes valeurs à la détection d'un coin. Plus la valeur de cette fonction en un point est grande ou forte, plus il y a de chance pour que ça soit un coin. Le facteur $\alpha$ définit la sensibilité du détecteur. Plus $\alpha$ est grand plus la sensibilité est faible et moins le nombre de coin sera grand. Généralement on fixe la valeur de $\alpha$ entre 0.04 et 0.06. Cette valeur peut être plus grande mais elle ne dépasse pas 0,25.

4. Après le calcul de la force de coins de chaque pixel, sauvegarder la position des points qui ont une valeur élevée de $R_\theta$ qui correspondront aux coins détectés. Cette première détection sera affinée par la suite car elle peut contenir des coins réels comme des coins erronés (problème de surdétection de coins),

5. Appliquer l'algorithme FAST dans le but de juger la densité autour du cercle entourant le point détecté p. Vérifier s'il existe un ensemble de *n* points contigus dans le cercle qui sont tous plus lumineux que Intensité(p)+t ou moins lumineux que Intensité(p)-t (t étant un seuil). Si tel est le cas alors p est un coin,

6. Utiliser la suppression non maximale pour éliminer les coins détectés qui sont adjacents les uns des autres :

6.1 Calculer une fonction de score V pour tous les coins détectés. V étant la somme de différences absolues entre le coin p et les 16 pixels qui l'entourent,

6.2 Comparer le score V des coins adjacents pour éliminer celui qui a le score V le plus faible.

7. Calculer l'angle de chaque coin ou point anguleux détecté en calculant la différence d'orientation entre les deux segments qui le composent,
Par exemple, si le premier segment a une orientation de 60° et le second 45° alors la différence est la valeur absolu de 60°-45° =15°.
Alternativement, le calcul des angles peut être fait non pas à partir des segments estimés mais directement à l'aide des valeurs des pixels dans la première image 1.

8. Calculer un degré d'irrégularité du noyau en combinant les données du nombre de points anguleux ou de coins détectés et leurs angles respectifs, Exemple de calcul du degré d'irrégularité :

$$Degré\ d'irrégularité\ du\ noyau = \sum_{i=1:nb\ coins} (1/angle_i)$$

9. A partir du résultat obtenu à l'étape 9, déterminer le niveau d'irrégularité du noyau en fonction de valeurs seuils prédéterminées ou entrées par un utilisateur.

Dans un troisième temps, on va décrire la troisième méthode consistant à fusionner la première et la seconde méthode de calcul de l'irrégularité du noyau.

On propose de fusionner les deux méthodes précédentes. La combinaison des résultats des deux méthodes précédentes peut se faire par des approches de fusion de données comme par exemple la logique floue. Voici dans ce qui suit un exemple de règles qui pourraient être appliquées :

1. Si la première méthode donne comme résultat « noyau régulier » et la seconde méthode donne comme résultat « noyau à degré d'irrégularité faible » alors la décision finale sera « noyau régulier »,

2. Si la première méthode donne comme résultat « noyau irrégulier » et la seconde méthode donne comme résultat « noyau à degré d'irrégularité moyen » alors la décision finale sera « noyau irrégulier »,

3. Si la première méthode donne comme résultat « noyau irrégulier » et la seconde méthode donne comme résultat « noyau à degré d'irrégularité nul » alors la décision finale sera « noyau régulier ».

Troisièmement, on va décrire le calcul d'une autre caractéristique experte d'anomalie qui est l'hyper colorimétrie du noyau.

On se propose ici de calculer le degré d'hyper colorimétrie du noyau. Les étapes sont les suivantes :

1. Calculer pour chaque cellule une intensité lumineuse moyenne de son noyau, correspondant à la somme de l'intensité lumineuse des pixels composant le noyau divisée par le nombre de pixels du noyau,

2. Calculer une moyenne I ref de l'intensité lumineuse moyenne des noyaux de toutes les cellules présentes dans la première image 1. I ref est la somme des intensités lumineuses moyennes de tous les noyaux des cellules divisée par le nombre de cellule,

3. Calculer l'intensité de l'hyper colorimétrie comme étant la différence entre l'intensité lumineuse moyenne du noyau de la cellule à contrôler et I ref:
Un seuil d'hyper colorimétrie sera déterminé par un procédé de classification (par apprentissage par exemple de type SVM ou réseaux de neurones). Ainsi, suivant la valeur obtenue et le seuil d'hypercolorimétrie, l'hyper colorimétrie ou non de la cellule sera déterminée.

Indifféremment, pour calculer l'hyper colorimétrie du noyau, dans l'ensemble des étapes décrites précédemment on pourra remplacer le calcul de la moyenne par le calcul de la médiane.

Quatrièmement, on va décrire le calcul d'une autre caractéristique experte d'anomalie qui est la colorimétrie mottée du noyau.

Pour ce faire, on propose trois méthodes pour estimer la colorimétrie mottée d'un noyau. La première méthode est basée sur les valeurs de l'intensité lumineuse des pixels de l'image, la seconde méthode est basée sur une estimation dans le domaine transformée et non dans le domaine image (Autrement dit, on ne l'applique pas sur les valeurs des pixels de l'image mais sur les valeurs des coefficients dans le domaine de la transformée), et la troisième méthode consiste à fusionner les deux méthodes précédentes.

Dans un premier temps, on va décrire la première méthode basée sur l'estimation dans le domaine image:

1. Calculer une variance V,

2. Calculer un histogramme de l'image et détecter un nombre de pics (Nb pics) dans l'histogramme, (S'il y a plus d'un pic, cela veut dire que le noyau n'a pas une couleur homogène),

3. Calculer pour chaque pixel de l'image (ou bloc) un tenseur à partir d'un gradient pour former une carte de cohérence. Si un pixel a une cohérence plus forte que la moyenne des cohérences de la zone dans laquelle il se trouve, alors il est caractéristique d'une zone non homogène:

Si cohérence(x,y) > Moyenne (Zone entourant (x,y)) + 3* EcartType(Zone entourant (x,y)) alors (x,y) appartient à une zone non homogène, Calculer une somme des points (ou blocs) non homogènes détectés par la cohérence (Nb coh),

4. Fusionner ces caractéristiques [V, Nb pics et Nb coh] et les utiliser pour détecter la colorimétrie mottée du noyau.

On comprendra que l'on peut utiliser ces caractéristiques à l'entrée d'un classifieur type SVM ou réseaux de neurones.

Dans un deuxième temps, on va décrire la deuxième méthode basée sur l'estimation dans le domaine de la transformée :

On se propose de définir une colorimétrie mottée par la présence de trois mottes au minimum dans la zone concernée, c'est-à-dire le noyau. Ici, l'idée est de détecter un minimum de trois contours fermés à l'intérieure de la zone. Pour ce faire, on se propose de détecter les contours par une transformée appropriée comme la transformée en contourlette. Cette transformée a la particularité d'avoir des coefficients de faible énergie (proche de 0) dans les zones homogènes et des coefficients de très forte énergie dans les zones anisotropes (non homogènes) et qui correspondent généralement aux contours de l'image. L'estimation de la colorimétrie mottée se fera en suivant les étapes les suivantes :

1. Faire la décomposition de l'image par une transformée multi échelle multidirectionnelle appropriée comme la transformée en contourlettes ou wave atoms,

2. Détecter les zones à fortes composante énergétique en appliquant un seuillage pour ne garder que les coefficients correspondant aux contours de l'image,

3. Appliquer une fonction non linéaire de rehaussement de contraste aux coefficients en contourlettes retenus (seuillés),

4. Reconstruire l'image contour à partir des coefficients retenus en utilisant la transformée inverse,

5. Détecter dans l'image contour les contours fermés et les énumérer,

6. S'il y a plus de trois contours fermés, on conclura que le noyau à une colorimétrie mottée.

Dans un troisième temps, on va décrire la troisième méthode consistant à fusionner la première et la seconde méthode de calcul de la colorimétrie mottée.

De même que pour le calcul de l'irrégularité du noyau, on propose, ici, de combiner les résultats obtenus par chacune des deux méthodes précédentes pour obtenir un résultat fin pour la caractéristique experte d'anomalie de colorimétrie mottée du noyau de chaque cellule.

On comprendra qu'à l'aide du module de traitement, l'ensemble des caractéristiques expertes d'anomalies calculées (rapport noyau/cellule, irrégularité du noyau, hypercolorimétrie et colorimétrie mottée) sont combinées avec des données de référence consistant en des données de références connues en cytologie. En particulier, ces données calculées peuvent être utilisées soit telles qu'elle, soit par un classifieur, soit fusionnées à d'autres caractéristiques calculées et générées par apprentissage profond pour déterminer si la cellule est normale ou présente au moins une anomalie, étape 144. Si l'échantillon ne comprend pas au moins une cellule présentant au moins une anomalie, alors la méthode de détection s'arrête ici et si l'échantillon présente au moins une cellule avec au moins une anomalie, la méthode de détection continue.

A la fin de l'étape de décèlement d'anomalie cellulaire 140, le module de traitement détermine un nombre total de cellules présentant au moins une anomalie dans l'échantillon cytologique, étape 146.

Puis, il peut intervenir, ici, une première étape de caractérisation de l'échantillon 150 suivant le niveau d'anomalie de l'échantillon dans sa globalité. Pour ce faire, le nombre total de cellules détectées présentant au moins une anomalie est comparé à une valeur seuil d'un niveau d'anomalie de l'échantillon. Cette valeur seuil du niveau d'anomalie de l'échantillon est définie au préalable par l'utilisateur pour la méthode. Elle correspond à au moins trois cellules présentant chacune au moins une anomalie. Cette valeur seuil du niveau d'anomalie peut indifféremment être définie au préalable par l'utilisateur selon la finesse du résultat de classification souhaitée.

Selon l'invention, si le nombre total de cellule avec au moins une anomalie est inférieur à la valeur seuil du niveau d'anomalie, l'échantillon cytologique est classé dans une classe représentative d'un échantillon avec un niveau d'anomalie nul 152, si le nombre total de cellule avec au moins une anomalie est supérieur ou égal à la valeur seuil du niveau d'anomalie, l'échantillon cytologique est classé dans une classe représentative d'un échantillon avec une classe avec un niveau d'anomalie non-négligeable 154, c'est-à-dire un faible niveau d'anomalie et un fort niveau d'anomalie 154.

En bref, selon un autre aspect, l'invention à ce stade permet ainsi de classer l'échantillon cytologique selon deux classes : une classe avec un niveau d'anomalie cellulaire nul 152 et une classe avec un niveau d'anomalie cellulaire non-négligeable 154. Ce résultat permet de mettre en évidence des anomalies cellulaires qui sont caractéristiques de cellules cancéreuses. Ainsi, il permet d'aider les cytotechniciens et cytopathologistes pour le diagnostic du cancer, en apportant un résultat standardisé fiable et rapide.

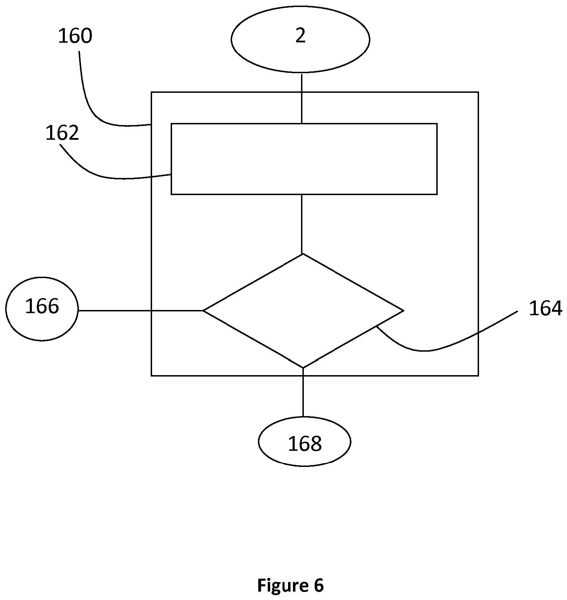

Tel qu'illustré sur la figure 6, la méthode de détection peut comprendre une seconde étape de caractérisation de l'échantillon 160 suivant le niveau d'anomalie cellulaire de l'échantillon, mettant notamment en évidence spécifiquement un niveau d'anomalie cellulaire faible dans l'échantillon. Ce niveau d'anomalie correspond à des cellules n'ayant pas encore subies de déformations morphologiques prononcées. De préférence, selon ce mode de réalisation particulier, l'invention permet de classer plus précisément l'échantillon soit dans une classe de niveau d'anomalie cellulaire dit « faible », soit dans une classe de niveau d'anomalie cellulaire dit « fort », ou soit dans une classe de niveau d'anomalie cellulaire dit « nul ».

Suite à la détection de cellule anormale, le classement de l'échantillon selon le niveau d'anomalie morphologique ou radiométrique de ces cellules de l'échantillon procure une réelle aide pour le médecin concernant le diagnostic du cancer. En effet le niveau d'anomalie cellulaire dit « faible » peut être associé au stade précoce dit « bas-grade » du cancer et le niveau d'anomalie dit « fort» peut être associé au stade avancé du cancer dit « haut grade ».

A cet effet, pour détecter les anomalies d'un niveau dit faible, l'invention utilise une seconde image 2 numérisée d'imagerie de fluorescence. A partir de cette seconde image 2, on sélectionne les cellules d'au moins un type cellulaire choisi, tel qu'urothélial, dans une étape de sélection typologique 162, grâce à leurs localisations prédéfinies dans l'échantillon dans la première image 1 numérisée. La première image 1 et la seconde image sont alors recalées, éventuellement à l'aide d'une méthode classique de recalage mis en oeuvre par ordinateur.

On comprendra que pour exécuter cette seconde étape de caractérisation 160, l'étape préliminaire de sélection typologique 130 à partir de la première image 1 doit nécessairement avoir été exécutée plus tôt dans la méthode selon l'invention pour pouvoir localiser les cellules du type cellulaire choisi.

Cette sous-étape de sélection typologique 162 d'un type cellulaire est suivie d'une sous-étape de détection d'un halo de fluorescence 164 autour de chaque cellule sélectionnée précédemment. On définit le terme « halo » comme un phénomène se traduisant par la présence d'une auréole fluorescente qui entoure la cellule et qui est bien contrastée. Dans une variante de réalisation, la force du halo, le taux de fluorescence ou le taux d'étalement de la fluorescence est mesuré. Ainsi, si un halo de fluorescence est détecté, de préférence si un taux minimum de fluorescence, ou de préférence encore, un taux minimum d'étalement de la fluorescence est détecté, on classe l'échantillon dans une classe représentative d'un échantillon avec un faible niveau d'anomalie 168. Inversement, les cellules ne présentant pas de fluorescence sont classées dans la classe de niveau d'anomalie nul et fort 166.

Selon la présente invention, on propose trois méthodes pour effectuer l'étape de seconde caractérisation de l'échantillon 160 à l'aide du module de traitement.

On détaille ci-dessous, les sous-étapes de l'étape de seconde caractérisation de l'échantillon 160 dans le cadre d'une première méthode :

- Utiliser la première image 1 et détecter le centre de chaque cellule d'un type cellulaire choisi, à l'aide du calcul du barycentre de la cellule,

- tracer un profil d'intensité le long de chaque segment de droite commençant du centre de la cellule jusqu'à la limite de chaque cellule selon différents angles. Par exemple, selon 8 angles : 0°, 45°, 90°, 135°,180°, 225°, 270° et 315°,

- détecter le pic Pmax (point maximum) pour chaque profil ainsi que le creux Pmin qui précède le maximum (le point minium),

- tracer sur la courbe du profil d'intensité une ligne horizontale partant du creux Pmin situé à droite du pic Pmax jusqu'à l'intersection Pint avec la courbe du profil d'intensité à gauche du pic Pmax,

- calculer la distance linéaire horizontale dx (en abscisse) entre Xmax l'abscisse du pic et Xint l'abscisse du point Pint,

- calculer la distance verticale dy (en ordonnée) entre Ymax l'ordonnée du pic et Yint=Ymin l'ordonnée de Pint et de Pmin,

- calculer pour chaque cellule détectée Dx et Dy qui sont la moyenne des dx et les dy selon les 8 angles. Dy représentera une première estimation de la force du halo de fluorescence du halo et Dx une première estimation de l'étalement du halo.

On détaille ci-dessous les sous-étapes de l'étape de seconde caractérisation de l'échantillon 160 dans le cadre d'une deuxième méthode :

On propose ici pour mesurer et calculer l'étalement d'un halo de fluorescence de partir des profils Radon des imagettes des cellules.

La transformée de radon représente une image comme une collection de projections dans diverses directions. Chaque projection selon une ligne représente un profil Radon.

Les étapes à suivre pour la deuxième méthode sont les suivantes :

- repérer la position de chaque cellule d'un type cellulaire choisi dans la première image 1,

- faire la correspondance dans la seconde image 2 pour extraire les imagettes correspondantes à chaque cellule du type cellulaire choisi en dépassant de 10 à 30% en longueur et en largeur autour de chaque noyau,

- calculer les profils Radon correspondants aux imagettes pour différents angles, de préférence les mêmes angles utilisés que dans la première méthode,

- pour chaque profil, détecter les deux pics Pmin et Pmax de chaque profil radon de chaque imagette dépassant de 10 à 30% en longueur et en largeur autour du noyau et suivre ensuite les étapes de la première méthode pour calculer une seconde estimation de l'intensité du halo et de son étalement.

Alternativement, dans le cadre d'une troisième méthode, l'étape de seconde caractérisation de l'échantillon 160 exécutée par le module de traitement, consiste en une méthode se basant sur le calcul de l'irrégularité du contour du « halo » de fluorescence présent. En d'autres termes si une cellule présente un fort niveau d'irrégularité du contour du halo, cela signifie qu'elle présente un halo de fluorescence. Pour ce faire cette troisième méthode consiste en l'une des trois méthodes du calcul d'irrégularité du noyau présentée précédemment.

Pour l'ensemble des trois méthodes d'exécution de la seconde caractérisation de l'échantillon 160, décrites ci-dessus, à titre non limitatif, les résultats obtenus pour déterminer la classe de l'échantillon sont comparés à des valeurs seuils du niveau d'intensité de fluorescence et/ou d'étalement qui sont prédéterminées ou entrées au préalable par un utilisateur.

On comprendra que ces trois méthodes décrites peuvent être combinées et traité par méthode d'apprentissage pour obtenir un résultat fin.

Cette étape de seconde caractérisation de l'échantillon 160 permet ainsi d'obtenir, in fine, la classification de la lame de l'échantillon, donc de l'échantillon dans trois classes possibles, c'est-à-dire: soit dans la classe de niveau d'anomalie nul, pouvant être associé à un échantillon provenant d'un sujet sain ; soit dans la classe de niveau d'anomalie cellulaire faible, pouvant être associé à un échantillon présentant des cellules cancéreuses à un stade précoce ou dit cancer « bas-grade » ; soit dans la classe de niveau d'anomalie cellulaire fort, pouvant être associé à un échantillon présentant des cellules cancéreuses à un stade avancé ou dit cancer « haut grade ».

Un deuxième aspect de l'invention propose d'utiliser une deuxième méthode de détection d'anomalie cellulaire dans l'échantillon cytologique en utilisant une méthode d'apprentissage profond pour faire la classification directe d'une image de lame d'échantillon cytologique selon un niveau d'anomalie cellulaire rencontré. De manière générale, une méthode d'apprentissage profond apprend à un modèle informatique comment réaliser des tâches telles que la classification directement à partir d'images. Contrairement à ce qui se fait habituellement dans le domaine de l'apprentissage profond et du traitement d'image, l'originalité de cette deuxième méthode est qu'elle classifie un ensemble d'imagettes sans faire de classification préalable de chacune des imagettes constituant l'ensemble de l'image. Plus précisément, cette méthode permet directement la classification de l'image de l'échantillon cytologique de la lame, c'est-à-dire de l'ensemble des cellules comprises dans l'image de l'échantillon sans

passer par une classification de chaque imagette ou cellule de l'échantillon. On notera que cette méthode de classification selon la présente invention est particulièrement utile lorsque la détection d'anomalies ou de pathologies peut seulement se faire en regardant l'ensemble d'une lame ou l'image de la lame, et non en regardant chaque cellule indépendamment les unes des autres. Pour ce faire, cette deuxième méthode de détection de cellule présentant au moins une anomalie dans l'échantillon utilise une modèle informatique d'apprentissage profond, prenant un ensemble d'observations en entrée et produisant une classification de cet ensemble en sortie. Ces observations peuvent directement être des imagettes brutes de l'échantillon cytologique et/ou une liste de valeurs caractérisant l'imagette (ou données de descripteurs), par exemple des valeurs calculées à l'aide de la première méthode (on comprendra que ces dernières données de descripteurs auront pour utilité d'apprendre au modèle informatique). Pour ce faire, cette deuxième méthode utilise une méthode d'apprentissage profond utilisant une architecture de réseau de neurones profond (NN). Quand ce réseau de neurones profond (NN) est utilisé sur les imagettes brutes, il s'agit d'un réseau de neurones profond à convolution (CNN). Le CNN convolue les caractéristiques apprises avec les données d'entrées du descripteur, et utilise des couches à convolution 2D, parfaitement adaptée au traitement des données 2D telles que les images. Le réseau de neurones à convolution peut extraire des représentations expertes des images directement via un apprentissage. Néanmoins, la méthode d'apprentissage profond nécessite une puissance de calcul considérable. Les calculs étant hautement parrallélisables, ils sont généralement faits sur un processeur graphique ou GPU. Le GPU a de grandes performances et est doté d'une architecture

parallèle, qui est efficace pour la mise en oeuvre de cette méthode d'apprentissage. Le GPU est intégré dans une unité de traitement ou CPU. Toutefois, l'utilisation de GPU n'est pas possible en traitant chacune des entrées indépendamment car l'une des opérations les plus chronophages reste le transfert des données de la mémoire au CPU et au GPU. De manière générale, pour pallier à ce problème, les méthodes d'apprentissage profond utilisent des tenseurs 4D (des tableaux à 4 dimensions) pour traiter de façon générale, les entrées par paquet ou batch.

Grâce à une utilisation originale du tenseur 4D, cette deuxième méthode de détection d'anomalie cellulaire classe l'image c'est-à-dire l'ensemble d'imagettes sans détection préalable de chacune d'entre elles. En d'autres termes, cette deuxième méthode de détection propose de détecter les cellules présentant au moins une anomalie cellulaire et de classer directement non pas une imagette mais un ensemble d'imagettes (l'imagette brute et/ou caractérisée par des valeurs calculées d'une autre manière) représentant l'image d'une lame d'un échantillon cytologique (lame). Pour effectuer cette deuxième méthode, l'entrainement du modèle informatique d'apprentissage profond s'effectue à l'aide d'un vaste ensemble de lames labellisées. Sans cet entrainement, la deuxième méthode de classification ne peut fonctionner. Dans ce cas, l'entrée est un ensemble d'imagettes (brutes et/ou caractérisées par la première méthode) et la sortie est une distribution de probabilités selon des classes pour affecter au finale une classe à chaque image de l'ensemble des imagettes de l'échantillon analysé. Selon l'invention, les classes seront choisies parmi une classe de niveau d'anomalie cellulaire faible, une classe de niveau d'anomalie cellulaire fort et/ou une classe de niveau d'anomalie cellulaire nul.

En outre, cette méthode effectue un apprentissage « de bout en bout » : c'est-à-dire connectant directement l'entrée à la sortie sans passer par une phase intermédiaire d'analyse de chaque imagette d'une image d'un échantillon cytologique. Plus précisément à partir d'un ensemble d'imagettes de cellules de l'échantillon cytologique, un réseau se voit assigner des tâches à accomplir (une classification, par exemple) et apprend comment les automatiser. Un autre avantage majeur de cette méthode est le fait que les algorithmes de la méthode d'apprentissage évoluent avec les données et continuent à s'améliorer en même temps que le volume des données augmente. De préférence, ces données proviennent au moins en partie des données obtenues grâce à la méthode de détection selon le premier aspect décrit précédemment. De préférence encore, ce deuxième aspect de la méthode de détection pourra avantageusement coupler les données d'une image en transmission et d'une image en fluorescence, c'est-à-dire d'une première et d'une deuxième image.

Le deuxième aspect de la méthode de détection propose ici la mis en oeuvre d'une méthode d'apprentissage profond, détournant la fonctionnalité de batch pour pouvoir traiter un ensemble.

Classiquement le tenseur 4Dimensions (4D) est composé de 2D pour la composante spatiale de l'image (1D pour la hauteur de l'image et 1D pour la largeur), 1D pour les canaux (RVB si on utilise Rouge Vert Bleu), et 1D pour le batch « B » (B correspondant au nombre d'images pour construire un batch ou un paquet).

De manière générale, l'utilisation du tenseur 4D a comme unique utilité d'accélérer les calculs. L'originalité de notre méthode est d'utiliser ce tenseur pour une autre finalité qui est celle de classifier des populations, ici des ensembles d'imagettes. Contrairement à ce que font classiquement les autres méthodes d'apprentissage qui prennent un lot de B d'images et produisent B décisions : 1 décision pour chaque image (le fait de prendre B>1 sert juste à gagner du temps), nous, on prend un lot de B imagettes (B : correspondant au nombre d'imagettes constituant l'ensemble de l'image) pour donner 1 seule décision basée sur l'ensemble d'imagettes. L'originalité proposée ici est justement d'utiliser cette fonctionnalité de faire des lots qui existe initialement pour des raisons de temps de calcul et d'en détourner sa fonctionnalité en l'utilisant pour un autre but et une autre finalité.

Considérons un ensemble d'imagettes correspondant à un nombre B (B devrait être assez petit pour que le batch puisse être transféré au GPU qui a une mémoire limitée). Classiquement, les méthodes d'apprentissages utilisent un batch de 32 à 64 imagettes à choisir pour accélérer le temps de calcul. Dans le contexte de l'invention, on ne choisit pas un nombre B prédéfini puisqu'on utilise ce nombre comme le nombre d'imagettes d'intérêts, par exemple les imagettes de cellules urothéliales par image de lame, ce nombre est différent d'une image de lame à une autre (selon le nombre de cellules urothélilales présente dans l'échantillon cytologique sur la lame). Il est ainsi possible de former un tenseur 4D avec ces B imagettes : $B \times RVB \times H \times W$ (B : nombre d'imagettes, RVB : pour les canaux trois couleurs Rouge Vert Bleu, H et W respectivement pour la hauteur et la largeur des imagettes). Il est également possible de considérer un nombre quelconque de canal classique RVB pour des images de microscopie électronique en transmission mais aussi un nombre quelconque de canal RVB associé à F (F : Fluorescence) pour un couple d'image de microscopie électronique en transmission et de microscopie à fluorescence, tel que RVB (Rouge vert Fluo). Ensuite, si nous transférons ce batch dans le réseau de neurones jusqu'à une couche entièrement connectée (c'est à dire une couche de neurones qui ne tient pas compte de l'aspect spatial de la couche précédente et qui de ce fait produit comme sortie uniquement un vecteur 1D par imagette), la sortie aura donc la taille $B \times F$ où F est la taille de cette couche entièrement connectée (ainsi le tenseur 4D a été transformé en un tenseur 2D).

Maintenant, il est possible de transposer ce tenseur 2D $B \times F$ comme un tenseur $1 \times F \times B$ et d'appliquer une opération symétrique sur B par exemple un pool 1D (max ou moyenne). Cette transposition est utile dans la mesure où les opérations symétriques sont nativement programmées pour avoir lieu sur les dimensions 3 et 4 et non sur la dimension 1 - la nécessité d'utiliser une couche entièrement connectée étant justement de libérer ces dimensions 3 et 4 pour la transposition. Ce résultat donne ainsi un tenseur $1 \times F$, où les caractéristiques F devraient contenir des informations concernant l'ensemble des imagettes. On comprendra que, ce 1 résulte du fait que cette ensemble doit conduire à 1 seule décision de classification affiliée au batch des B imagettes. De cette façon, il est possible d'utiliser une méthode d'apprentissage profond classique pour former un réseau de bout en bout pour une problématique de classification d'une image d'échantillon cytologique c'est-à-dire d'un ensemble d'imagettes.

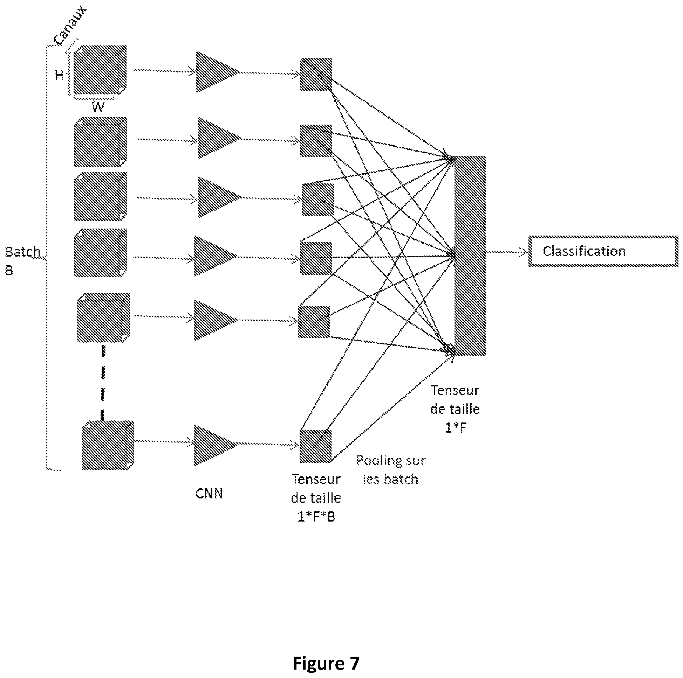

La figure 7 résume la méthodologie d'implémentation pour un apprentissage profond appliqué à la classification d'une image d'échantillon cytologique correspondant à un ensemble d'imagettes.

La classe finale est assignée à un ensemble d'imagettes. On comprendra que cette méthode d'implémentation est appliquée ici à la classification d'image d'échantillon cytologique mais peut indifféremment être appliquée à d'autres domaines de façon non limitative.

L'invention propose selon un premier aspect une méthode de classification d'échantillon cytologique permettant d'extraire et de calculer des caractéristiques expertes d'anomalie cellulaire présente dans un échantillon pour contribuer au diagnostic du cancer, à l'aide de la vision par ordinateur. L'invention propose, ici, également selon un deuxième aspect, une deuxième méthode de classification d'échantillon cytologique selon des niveaux d'anomalie cellulaire rencontrés dans l'échantillon, en utilisant une méthode d'apprentissage profond, pouvant contribuer au diagnostic du cancer, à l'aide de la vision par ordinateur. L'invention se rapporte également à un dispositif de classification d'échantillon cytologique, à partir d'au moins une image numérisée, adapté à la mise en oeuvre d'une telle méthode. Chaque utilisateur peut définir les seuils qu'il prend en compte pour effectuer la méthode de classification. En outre, on propose une approche générale qui s'adapte à chaque utilisateur selon le besoin c'est-à-dire selon le domaine d'application et la finesse du résultat de la classification souhaitée.

**Revendications**

1. Méthode de détection de cellules présentant au moins une anomalie dans un échantillon cytologique à partir d'au moins une première image (1) de microscopie électronique numérisée de l'échantillon, la méthode est exécutée à l'aide d'un module de traitement mis en oeuvre par ordinateur,

la méthode comprend une étape de traitement de la première image (110), comprenant les sous-étapes suivantes :

- à partir de la première image (1), détecter chaque élément (4) présent dans l'échantillon (étape 112), puis filtrer chaque élément (4) choisi parmi au moins une cellule isolée (10) ou un groupement de cellules (14), à l'aide d'une détection colorimétrique,
- à partir de chaque groupement de cellules (14) détecté, individualiser au moins une cellule avec son noyau, à l'aide d'au moins une méthode de segmentation fondée sur une détection des contours dans le groupement de cellules (14) (étape 116),

la méthode comprend en outre une étape de décèlement d'anomalie cellulaire (étape 140), comprenant les sous-étapes suivantes :

- pour chaque cellule isolée (10) ou individualisée dans l'étape précédente, calculer des données d'au moins deux caractéristiques d'anomalies distinctes dites « caractéristiques expertes d'anomalie», et déterminer si ladite cellule présente au moins une anomalie (étape 144), en comparant ces données calculées avec des données de références (étape 142),
- puis compter le nombre total de cellules dans l'échantillon présentant au moins une anomalie (étape 146),

la méthode comprend en outre une première étape de caractérisation de l'échantillon (étape 150) suivant un niveau d'anomalie de l'échantillon, comprenant les sous-étapes suivantes:

- comparer le nombre total de cellules présentant au moins une anomalie à une valeur seuil du niveau d'anomalie, de préférence une valeur seuil égale à au moins trois cellules présentant chacune au moins une anomalie,
- si le nombre total de cellules présentant au moins une anomalie est inférieur à la valeur seuil du niveau d'anomalie, classer l'échantillon dans une classe représentative d'un échantillon avec un niveau d'anomalie nul (152),
- si le nombre total de cellules présentant au moins une anomalie est supérieur à la valeur seuil du niveau d'anomalie, classer l'échantillon dans une classe représentative d'un échantillon avec un niveau d'anomalie avéré (154),

la méthode comprend en outre une étape de sélection typologique (étape 130), comprenant les sous-étapes suivantes:

- à partir de la première image (1) numérisée de l'échantillon, mesurer la taille des cellules, puis classer les cellules selon leur taille (étape 132),
- associer chaque classe de cellules mesurées à un type cellulaire correspondant, puis sélectionner au moins un type cellulaire choisi, tel que le type cellulaire urothélial (étape 134),

**caractérisée en ce que** la méthode comprend une seconde étape de caractérisation de l'échantillon (étape 160) suivant un niveau d'anomalie des cellules de l'échantillon, comprenant en outre les sous-étapes suivantes:

- à partir d'une seconde image (2) de fluorescence numérisée de l'échantillon, sélectionner toutes les cellules du type cellulaire choisi selon leur localisation dans l'échantillon prédéfinie (étape 134) au préalable dans la première image (1) numérisée (étape 162),
- détecter la présence d'un halo de fluorescence autour de chaque cellule sélectionnée précédemment,
- si un halo de fluorescence est détecté, classer l'échantillon dans une classe représentative d'un échantillon avec un niveau d'anomalie cellulaire faible (168).

2. Méthode selon la revendication 1, **caractérisée en ce qu'**au moins une des caractéristiques expertes d'anomalie est un rapport surfacique du noyau dans la cellule ou une irrégularité du noyau ou une colorimétrie mottée ou une hyper colorimétrie du noyau.

3. Méthode selon la revendication 1 ou 2, **caractérisée en ce qu'**au moins une des caractéristiques expertes d'anomalie est une irrégularité du noyau, le calcul de ladite irrégularité du noyau est un calcul d'écart correspondant à la comparaison entre chaque noyau de cellule analysée et un noyau type d'une cellule dite de « référence », ce calcul d'écart est choisi parmi la liste suivante: une différence de surface, une différence de périmètre, une différence de la convexité du noyau, une différence de barycentre, une différence entre une longueur du contour de chaque noyau détecté, une différence d'irrégularité d'un contour du noyau, une différence du nombre de pixels dans chaque noyau et une différence d'excentricité du noyau dans la cellule.

4. Méthode selon l'une quelconque des revendications précédentes, dans laquelle, à la seconde étape de caractérisation de l'échantillon (étape 160), le type cellulaire choisi des cellules sélectionnées à partir de la seconde image (2) de fluorescence numérisée de l'échantillon, est un type urothélial.

5. Méthode selon l'une quelconque des revendications précédentes, dans laquelle, à la seconde étape de caractérisation de l'échantillon (étape 160), la sous-étape consistant à détecter la présence d'un halo de fluorescence autour de chaque cellule sélectionnée précédemment, consiste à mesurer un taux de fluorescence (étape 164), et dans laquelle l'échantillon est classé dans une classe représentative d'un échantillon avec un niveau d'anomalie cellulaire faible (168) si le taux de fluorescence mesuré est supérieur à un taux minimum de fluorescence de référence.

6. Méthode selon l'une quelconque des revendications précédentes, dans laquelle, à la seconde étape de caractérisation de l'échantillon (étape 160), la sous-étape consistant à détecter la présence d'un halo de fluorescence autour de chaque cellule sélectionnée précédemment, consiste à mesurer un taux d'étalement de la fluorescence (étape 164),
et dans laquelle l'échantillon est classé dans une classe représentative d'un échantillon avec un niveau d'anomalie cellulaire faible (168) si le taux d'étalement de la fluorescence mesuré est supérieur à un taux minimum d'étalement de la fluorescence.

7. Méthode selon l'une quelconque des revendications précédentes, **caractérisée en ce qu'**elle comprend une étape de recommandation d'exploitabilité (étape 120) de l'échantillon cytologique selon un nombre de cellules comprenant un noyau et selon une valeur seuil minimum d'exploitabilité, de préférence la valeur seuil minimum d'exploitabilité est égale à au moins sept cellules comprenant un noyau détectées dans la première image (1).

8. Méthode selon l'une quelconque des revendications précédentes, **caractérisée en ce que** la méthode à l'aide du module de traitement combine l'ensemble des données obtenues et classe l'échantillon cytologique analysé à partir de la première image (1) et de la seconde image (2), dans l'une des trois classes associée à un niveau d'anomalie cellulaire de l'échantillon, nul, faible ou fort.

9. Méthode selon l'une quelconque des revendications précédentes, **caractérisée en ce que** ledit échantillon cytologique est un échantillon urinaire de miction spontanée.

**Patentansprüche**

1. Verfahren zum Erkennen von Zellen mit mindestens einer Anomalie in einer zytologischen Probe aus mindestens einem ersten digitalisierten elektronenmikroskopischen Bild (1) der Probe, wobei das Verfahren mit Hilfe eines computerimplementierten Verarbeitungsmoduls durchgeführt wird,

das Verfahren umfassend einen Schritt der Verarbeitung des ersten Bildes (110), umfassend die folgenden Unterschritte:

- aus dem ersten Bild (1), Erkennen jedes Elements (4), das in der Probe vorhanden ist (Schritt 112), und dann Filtern jedes Elements (4), das aus mindestens einer isolierten Zelle (10) oder einer Gruppe von Zellen (14) ausgewählt ist, unter Verwendung eines kalorimetrischen Erkennens,
- aus jedem erkannten Zellverband (14), Individualisieren mindestens einer Zelle mit ihrem Kern unter Verwendung mindestens eines Segmentierungsverfahrens, das auf dem Erkennen von Konturen in der Zellgruppe (14) basiert (Schritt 116),

das Verfahren ferner einen Zellanomalie-Detektionsschritt (Schritt 140) umfasst, umfassend die folgenden Unterschritte:

- für jede isolierte (10) oder im vorherigen Schritt individualisierte Zelle, Berechnen von Daten von mindestens zwei unterschiedlichen Anomaliemerkmalen, die als "Expertenanomaliemerkmale" bezeichnet werden, und Bestimmen, ob die Zelle mindestens eine Anomalie aufweist (Schritt 144), indem diese berechneten Daten mit Referenzdaten verglichen werden (Schritt 142),
- und dann Zählen der Gesamtzahl der Zellen in der Probe, die mindestens eine Anomalie aufweisen (Schritt 146),

das Verfahren ferner einen ersten Schritt zur Charakterisierung der Probe (Schritt 150) entsprechend einem Grad der Anomalie der Probe umfasst, umfassend die folgenden Unterschritte:

- Vergleichen der Gesamtzahl der Zellen, die mindestens eine Anomalie aufweisen, mit einem Schwellenwert für das Anomalieniveau, vorzugsweise einem Schwellenwert, der gleich mindestens drei Zellen ist, die jeweils mindestens eine Anomalie aufweisen,
- wenn die Gesamtzahl der Zellen mit mindestens einer Anomalie unter dem Schwellenwert des Anomalieniveaus liegt, Klassifizieren der Probe in eine Klasse, die für eine Probe mit einem Anomalieniveau von Null repräsentativ (152) ist,
- wenn die Gesamtzahl der Zellen, die mindestens eine Anomalie aufweisen, über dem Schwellenwert des Anomalieniveaus liegt, Klassifizieren der Probe in eine Klasse, die repräsentativ für eine Probe mit einem nachgewiesenen Anomalieniveau (154) ist,

das Verfahren ferner einen typologischen Auswahlschritt (Schritt 130) umfasst, umfassend die folgenden Unterschritte:

- aus dem ersten digitalisierten Bild (1) der Probe, Messen der Größe der Zellen und dann Klassifizieren der Zellen nach ihrer Größe (Schritt 132),
- Zuordnen jeder Klasse von gemessenen Zellen zu einem entsprechenden Zelltyp und dann Auswählen von mindestens einem ausgewählten Zelltyp, wie beispielsweise dem urothelialen Zelltyp (Schritt 134),

**dadurch gekennzeichnet, dass** das Verfahren einen zweiten Schritt der Charakterisierung der Probe (Schritt 160) gemäß einem Anomalieniveau der Zellen in der Probe umfasst, ferner umfassend die folgenden Unterschritte:

- aus einem zweiten digitalisierten Fluoreszenzbild (2) der Probe, Auswählen aller Zellen des ausgewählten Zelltyps gemäß ihrer Lokalisierung in der Probe, die zuvor in dem ersten digitalisierten Bild (1) (Schritt 162) definiert wurde (Schritt 134),
- Erkennen des Vorhandenseins eines Fluoreszenzhalos um jede zuvor ausgewählte Zelle,
- wenn ein Fluoreszenzhalo erkannt wird, Klassifizieren der Probe in eine Klasse, die repräsentativ für eine Probe mit einem niedrigen Anomalieniveau der Zellen (168) ist.

2. Verfahren nach Anspruch 1, **dadurch gekennzeichnet, dass** mindestens eines der Expertenmerkmale für die Anomalie ein Oberflächenverhältnis des Kerns in der Zelle oder eine Unregelmäßigkeit des Kerns oder eine Klumpenkolorimetrie oder eine Hyperkolorimetrie des Kerns ist.

3. Verfahren nach Anspruch 1 oder 2, **dadurch gekennzeichnet, dass** mindestens eines der Expertenmerkmale der Anomalie eine Kernunregelmäßigkeit ist, die Berechnung der Kernunregelmäßigkeit eine Abweichungsberechnung ist, die dem Vergleich zwischen jedem analysierten Zellkern und einem Standardkern einer sogenannten "Referenz"-Zelle entspricht, wobei diese Abweichungsberechnung aus der folgenden Liste ausgewählt wird: eine Oberflächendifferenz, eine Umfangsdifferenz, eine Kernkonvexitätsdifferenz, eine Schwerpunktdifferenz, eine Differenz zwischen einer Länge der Kontur jedes erkannten Kerns, eine Differenz der Unregelmäßigkeit einer Kontur des Kerns, eine Differenz der Anzahl von Pixeln in jedem Kern und eine Differenz der Exzentrizität des Kerns in der Zelle.

4. Verfahren nach einem der vorstehenden Ansprüche, wobei im zweiten Schritt der Charakterisierung der Probe (Schritt 160) der ausgewählte Zelltyp der Zellen, die aus dem zweiten digitalisierten Fluoreszenzbild (2) der Probe ausgewählt wurden, ein Urothel-Typ ist.

5. Verfahren nach einem der vorstehenden Ansprüche, wobei im zweiten Schritt der Charakterisierung der Probe (Schritt 160) der Unterschritt des Erkennens des Vorhandenseins eines Fluoreszenzhalos um jede zuvor ausgewählte Zelle das Messen einer Fluoreszenzrate umfasst (Schritt 164), und wobei die Probe in eine Klasse eingestuft wird, die repräsentativ für eine Probe mit niedrigem Anomalieniveau der Zellen (168) ist, wenn die gemessene Fluoreszenzrate größer als eine minimale Referenzfluoreszenzrate ist.

6. Verfahren nach einem der vorstehenden Ansprüche, wobei im zweiten Schritt der Charakterisierung der Probe (Schritt 160) der Unterschritt des Erkennens des Vorhandenseins eines Fluoreszenzhalos um jede zuvor ausgewählte Zelle das Messen einer Fluoreszenzspreizrate (Schritt 164) umfasst,
und wobei die Probe in eine Klasse klassifiziert wird, die repräsentativ für eine Probe mit einem niedrigen Anomalieniveau der Zellen (168) ist, wenn die gemessene Fluoreszenzausbreitungsrate größer als eine minimale Fluoreszenzausbreitungsrate ist.

7. Verfahren nach einem der vorstehenden Ansprüche, **dadurch gekennzeichnet, dass** es einen Schritt zur Empfehlung der Auswertbarkeit (Schritt 120) der zytologischen Probe gemäß einer Anzahl von Zellen, die einen Kern umfassen, und gemäß einem minimalen Auswertbarkeitsschwellenwert umfasst, wobei vorzugsweise der minimale Auswertbarkeitsschwellenwert gleich mindestens sieben Zellen ist, die einen Kern umfassen, der in dem ersten Bild (1) erkannt wurde.

8. Verfahren nach einem der vorstehenden Ansprüche, **dadurch gekennzeichnet, dass** das Verfahren mit Hilfe des Verarbeitungsmoduls alle erhaltenen Daten kombiniert und die zytologische Probe, die aus dem ersten Bild (1) und dem zweiten Bild (2) analysiert wurde, in eine von drei Klassen einordnet, die mit einem zellulären Anomalieniveau der Probe, null, schwach oder stark, verbunden ist.

9. Verfahren nach einem der vorstehenden Ansprüche, **dadurch gekennzeichnet, dass** die zytologische Probe eine Urinprobe von spontanem Urinieren ist.

## Claims

1. A method for detecting cells having at least one anomaly in a cytological sample from at least a first image (1) of digitised electron microscopy of the sample, the method is executed using a computer-implemented processing module,

the method comprises a step of processing the first image (110), comprising the following sub-steps:

- from the first image (1), detecting each element (4) present in the sample (step 112), then filtering each element (4) selected from at least one isolated cell (10) or a group of cells (14), using colorimetric detection,
- from each detected group of cells (14), individualising at least one cell with the nucleus thereof, using at least one segmentation method based on a detection of the contours in the group of cells (14) (step 116),

the method further comprises a step of identifying a cellular anomaly (step 140), comprising the following substeps:

- for each isolated or individualised cell (10) in the preceding step, calculating data of at least two distinct anomaly characteristics called "expert anomaly characteristics", and determining whether said cell has at least one anomaly (step 144), by comparing these data calculated with reference data (step 142),
- then counting the total number of cells in the sample having at least one anomaly (step 146),

the method further comprises a first step of characterising the sample (step 150) according to a level of anomaly of the sample, comprising the following substeps:

- comparing the total number of cells having at least one anomaly to a threshold value of the level of anomaly, preferably a threshold value which is equal to at least three cells each having at least one anomaly,
- if the total number of cells having at least one anomaly is less than the threshold value of the level of anomaly, classifying the sample in a class representative of a sample with a zero level of anomaly (152),
- if the total number of cells having at least one anomaly is greater than the threshold value of the level of anomaly, classifying the sample in a class representative of a sample with a proven level of anomaly (154),

the method further comprises a step of typological selection (step 130), comprising the following sub-steps:

- from the first digitised image (1) of the sample, measuring the size of the cells, then classifying the cells according to their size (step 132),
- associating each class of measured cells with a corresponding cell type, then selecting at least one chosen cell type, such as the urothelial cell type (step 134),

**characterised in that** the method comprises a second step of characterising the sample (step 160) according to a level of anomaly of the cells of the sample, further comprising the following sub-steps:

- from a second digitised fluorescence image (2) of the sample, selecting all cells of the chosen cell type according to their location in the sample which is predefined (step 134) beforehand in the first digitised image (1) (step 162),
- detecting the presence of a fluorescence halo around each previously selected cell,

if a fluorescence halo is detected, classifying the sample in a class representative of a sample with a low level of cellular anomaly (168).

2. The method according to claim 1, **characterised in that** at least one of the expert anomaly characteristics is a surface ratio of the nucleus in the cell or an irregularity of the nucleus or a mottled colorimetry or a hyper-colorimetry of the nucleus.

3. The method according to claim 1 or 2, **characterised in that** at least one of the expert anomaly characteristics is an irregularity of the nucleus, the calculation of said irregularity of the nucleus is a calculation of deviation corresponding to the comparison between each nucleus of the analysed cell and a typical nucleus of a cell called "reference" cell, this calculation of deviation is selected from the following list: a difference in surface, a difference in perimeter, a difference in the convexity of the nucleus, a difference in barycentre, a difference between a length of the contour of each detected nucleus, a difference in irregularity of a contour of the nucleus, a difference in the number of pixels in each nucleus and a difference in eccentricity of the nucleus in the cell.

4. The method according to any one of the preceding claims, wherein, in the second step of characterising the sample (step 160), the selected cell type of the cells selected from the second digitised fluorescence image (2) of the sample, is a urothelial type.

5. The method according to any one of the preceding claims, wherein, in the second step of characterising the sample (step 160), the substep consisting in detecting the presence of a fluorescence halo around each previously selected cell, consists in measuring a fluorescence rate (step 164), and wherein the sample is classified in a class representative of a sample with a low level of cellular anomaly (168) if the measured fluorescence rate is greater than a minimum reference fluorescence rate.

6. The method according to any one of the preceding claims, wherein, in the second step of characterising the sample (step 160), the substep consisting in detecting the presence of a fluorescence halo around each previously selected cell, consists in measuring a fluorescence spreading rate (step 164),
and wherein the sample is classified in a class representative of a sample with a low level of cellular anomaly (168) if the measured fluorescence spreading rate is greater than a minimum fluorescence spreading rate.

7. The method according to any one of the preceding claims, **characterised in that** it comprises a step of recommending the usability (step 120) of the cytological sample according to a number of cells comprising a nucleus and according to a minimum usability threshold value, preferably the minimum usability threshold value is equal to at least seven cells comprising a nucleus which are detected in the first image (1).

8. The method according to any one of the preceding claims, **characterised in that** the method using the processing module combines all data obtained and classifies the cytological sample analysed from the first image (1) and the second image (2), in one of the three classes associated with a zero, low or high level of cellular anomaly of the sample.

9. The method according to any one of the preceding claims, **characterised in that** said cytological sample is a urinary sample of spontaneous urination.

110

1

112
114
116

12

120

STOP

130

132

134

140

Autres types
cellulaires

142

STOP

144

146

150

152

154

Si nombre de cellules
total < à la valeur seuil

Si nombre de cellules
total >= à la valeur seuil

**Figure 1**

**Figure 2**

**Figure 3**

**Figure 4**

**Figure 5**

160

2

162

166

164

168

**Figure 6**

**Figure 7**

**EP 3 775 840 B1**

## RÉFÉRENCES CITÉES DANS LA DESCRIPTION

### Documents brevets cités dans la description

- US 5933519 A